# EUROPÄISCHE PATENTSCHRIFT

(11) **EP 2 445 761 B1**
(45) Veröffentlichungstag und Bekanntmachung des Hinweises auf die Patenterteilung: **14.05.2014**
(21) Anmeldenummer: 10739493.4
(22) Anmeldetag: 23.06.2010
(51) Int. Cl.: B60R 21/203

(54) **BAUGRUPPE UND GASSACKMODUL**
ASSEMBLY AND AIR BAG MODULE
ENSEMBLE ET MODULE AIRBAG

(30) Priorität: 26.06.2009 DE 102009030601
(43) Veröffentlichungstag der Anmeldung: 02.05.2012
(73) Patentinhaber: TRW Automotive Safety Systems GmbH, 63743 Aschaffenburg (DE)
(72) Erfinder: STAUDT, Holger, 63762 Grossostheim (DE)
(74) Vertreter: Mehnert, Bernhard
(86) Internationale Anmeldenummer: PCT/EP2010/003763
(87) Internationale Veröffentlichungsnummer: WO 2010/149347

(56) Entgegenhaltungen:
- EP-A1- 1 452 404
- DE-A1-102007 054 056
- DE-C1- 10 215 330
- DE-U1- 20 105 434
- DE-U1- 20 210 372

## Beschreibung

Die Erfindung betrifft eine Baugruppe aus einem Gasgenerator, insbesondere für ein Fahrzeuginsassen-Rückhaltesystem, nach dem Oberbegriff von Patentanspruch 1.

Bei im Lenkrad angeordneten Gassackmodulen können Fahrzeugbewegungen, die Schwingungen des Lenkrads hervorrufen, zu unerwünschten Effekten führen. Dies gilt umso mehr, wenn ein sogenanntes Floating-Horn-Modul verwendet wird, bei dem zur Betätigung der Hupe das gesamte Gassackmodul inklusive des relativ schweren Gasgenerators beweglich befestigt ist. Es gibt Lösungsansätze, bei denen die Masse des Gasgenerators vom restlichen Gassackmodul über ein zwischengeschaltetes elastisches Element entkoppelt wird. Eine derartige Entkoppelung ist aufwendig, insbesondere, weil der Platz im Lenkrad sehr begrenzt ist. Daher besteht Bedarf an einer einfachen, preisgünstigen sowie platzsparenden Schwingungsentkopplung des Gasgenerators.

Insbesondere ist eine Baugruppe der eingangs genannten Art aus der DE 10 2007 054056 A1 bekannt. Daneben zeigt die EP 1 452 404 A1 ein Gassackmodul für Lenkräder mit einer starren Verbindung zwischen Gasgenerator und Modulgehäuse.

Der Erfindung liegt die Aufgabe zugrunde, den elastisch gelagerten Gasgenerator auch bei seiner Aktivierung in einer definierten Position zu haltern.

Diese Aufgabe wird erfindungsgemäß durch die kennzeichnenden Merkmale von Patentanspruch 1 gelöst.

Die Erfindung erlaubt es, einen weitverbreiteten, herkömmlichen Gasgeneratortyp zu verwenden, so dass der Gasgenerator nicht eigens auf das Generatorlagerteil abgestimmt werden muss, wie dies bei herkömmlichen Lagerungen zur Schwingungsentkoppelung oft der Fall ist. Stattdessen wird gemäss der Erfindung vorzugsweise das Halteteil plastisch umgeformt, um das Generatorlagerteil am Flansch des Gasgenerators bleibend zu befestigen. Alternativ kann auch der Befestigungsflansch umgeformt werden, oder es können beide Bauteile ganz oder partiell verformt werden. Die Befestigung des Gasgenerators am Generatorträger und auch die Entkoppelung des Gasgenerators in Bezug auf Schwingungen erfolgt vollständig über einen oder mehrere Befestigungsfüße aus dem elastischen Material. Diese unterbinden eine direkte Schwingungsubertragung vom Generatorträger auf den Gasgenerator.

Optional kann der Gasgenerator auch als Schwingungstilger wirken.

Das Halteteil ist bevorzugt ringförmig ausgebildet, so dass es den Befestigungsflansch umgeben kann.

Das Halteteil kann beispielsweise durch Krimpen, Prägen oder Umbördeln am Befestigungsflansch arretiert sein, wobei sowohl das Halteteil als auch der Befestigungsflansch verformt werden können. Natürlich ist aber auch jede andere geeignete Methode des plastischen Umformens einsetzbar.

Um auf einfache Weise eine stabile Befestigung zu erzielen, ist vorzugsweise das Halteteil umlaufend am Gasgenerator befestigt. Es ist jedoch auch möglich, nur abschnittsweise eine Befestigung vorzusehen.

Gemäß einer bevorzugten Ausführungsform der Erfindung weist das Generatorlagerteil wenigstens eine Anschlaglippe aus dem elastischen Material auf, die sich im Wesentlichen in einer Axialrichtung der Baugruppe erstreckt. Die Anschlaglippe kommt bei einer Vertikalbewegung, also bei einer Bewegung in Axialrichtung, in Anschlag an den Generatorträger und begrenzt den Bewegungsweg des Gasgenerators in dieser Richtung. Vorteilhaft ist in einem Normalzustand der Baugruppe, wenn diese in einem Gassackmodul eingebaut ist, ein Abstand zwischen der Anschlaglippe und dem Generatorträger vorhanden.

Um eine sichere und einfache Begrenzung auch heftiger Bewegungen des Gasgenerators zu gewährleisten, kann ein in Axialrichtung abstehender Fortsatz des Halteteils im Bereich der Anschlaglippe vorgesehen sein, so dass die Stabilität der Anschlaglippe durch das Metallblech des Halteteils erhöht wird.

Vorzugsweise ist der Fortsatz in die Anschlaglippe eingebettet, wobei vorteilhaft das axial freie Ende der Anschlaglippe nur aus dem elastischen Material gebildet ist.

Der Fortsatz lässt sich beispielsweise durch wenigstens eine vom Halteteil abstehende Zunge realisieren. Auf diese Weise ist eine einfache Fertigung des Halteteils, etwa als Stanz-Biegeteil, möglich.

Die Anschlaglippe ist bevorzugt zumindest weitgehend umfangsmäßig geschlossen umlaufend ausgebildet, wobei sie umfangsmäßig vorteilhaft so weit geschlossen ist, wie es die Geometrie des Generatorlagerteils und der Befestigungsfüße erlaubt.

Als elastisches Material wird vorzugsweise Silikon eingesetzt, und der Befestigungsfuß ist vorzugsweise an das Halteteil angespritzt.

Auch die Anschlaglippe ist vorzugsweise an das Halteteil angespritzt. Auf diese Weise ist eine stabile Verbindung der Teile aus dem elastischen Material mit dem Metallblech des Halteteils bei sehr flexibler Geometrie in einfacher Fertigung möglich.

Die Erfindung betrifft außerdem ein Gassackmodul mit einer oben beschriebenen Baugruppe, wobei mehrere Befestigungsfüße vorgesehen sind, die den Gasgenerator am Generatorträger befestigen. Die Befestigungsfüße dienen dabei als einzige Befestigung zwischen der Baugruppe und dem Generatorträger.

Jeder Befestigungsfuß kann vor der Montage am Generatorträger eine Montagezunge aufweisen, die das freie Ende des Befestigungsfußes bildet. An dieser Befestigungszunge lässt sich der Befestigungsfuß beispielsweise durch eine Öffnung im Generatorträger ziehen, an der er verrastet. Die Montagezunge wird nach der Montage der Baugruppe entfernt, sie kann aber auch am Befestigungsfuß verbleiben.

Jeder der Befestigungsfüße weist vorteilhaft eine umlaufende Nut auf, in die ein Rand der Öffnung im Generatorträger eingreift, so dass der Befestigungsfuß in der Öffnung verrastet und so sicher an der Öffnung befestigt ist.

Bevorzugt liegt die Anschlaglippe einem axialen und/oder einem radialen Anschlag am Generatorträger gegenüber, der eine Bewegung des Gasgenerators in Axialrichtung und/oder Radialrichtung begrenzt. Durch die Ausbildung des Anschlags in Axial- und/oder Radialrichtung kann ein Bewegungsspielraum des Gasgenerators individuell vorgegeben werden. Der Anschlag in Axialrichtung kann dabei einfach von einem Oberflächenabschnitt des Generatorträgers gebildet sein.

Bei einer Aktivierung des Gasgenerators kommt die Anschlaglippe vorzugsweise in Anlage an den Generatorträger und bewirkt eine Abdichtung zwischen Gasgenerator und Generatorträger. Aufgrund des Impulses des ausströmenden Gases sowie des Innendrucks des Gassacks wird der Gasgenerator in Axialrichtung in Richtung Generatorträger gedrückt, so dass die Anschlaglippe in Anlage an den Generatorträger kommt. Auf diese Weise wird erreicht, dass das Füllgas für einen Gassack, das vom Gasgenerator bereitgestellt wird, nicht durch den Spalt zwischen Gasgenerator und Generatorträger entweichen kann. Hierbei ist es vorteilhaft, wenn die Anschlaglippe möglichst vollständig umfangsmäßig umlaufend gestaltet ist. Jedoch hat sich gezeigt, dass sich Kleine Lücken in der Anschlaglippe nicht negativ auswirken.

Weitere Merkmale und Vorteile der Erfindung ergeben sich aus der nachfolgenden Beschreibung eines Ausführungsbeispiels, mit Bezug auf die beigefügten Zeichnungen. In diesen zeigen:
- Figur 1 eine teilgeschnittene Ansicht eines erfindungsgemäßen Gassackmoduls mit einer erfindungsgemäßen Baugruppe; und
- Figur 2 einen Ausschnitt des Gassackmoduls in Figur 1 in einer Schnittansicht. Figur 1 zeigt ein Gassackmodul 10, das zur Verwendung in einem Lenkrad eines Personenkraftwagens bestimmt ist. In einem Modulgehäuse aus einem Generatorträger 12 und einer nur angedeuteten Abdeckkappe 14 ist ein Gassack 15 gefaltet aufgenommen. Das Füllgas für den Gassack 15 wird von einem hier topfförmigen Gasgenerator 16 geliefert.

Der Gasgenerator 16 ist über ein Generatorlagerteil 18 elastisch am Generatorträger 12 gelagert und bildet zusammen mit dem Generatorlagerteil 18 eine vorgefertigte Baugruppe 20. Zwischen dem Gasgenerator 16 und dem Gassack 15 ist mit Abstand zum Gasgenerator 16 ein kappenförmiger Diffusor 22 angeordnet. Hierdurch ist ein gewisser begrenzter Bewegungsspielraum für den Gasgenerator 16 in allen Raumrichtungen gegeben.

Das Generatorlagerteil 18 besteht aus einem Halteteil 24 aus einem Metallblech sowie aus mehreren Befestigungsfüßen 26 und einer Anschlaglippe 28 aus einem elastischen Material. Als elastisches Material wird in diesem Beispiel Silikon verwendet. Die Befestigungsfüße 26 und die Anschlaglippe 28 sind an das Halteteil 24 angespritzt.

Das Halteteil 24 ist hier in Form eines umlaufenden Rings gestaltet, der einen L-förmigen Querschnitt mit einem hochgezogenen Außenrand 30 aufweist. Um Generatorlagerteil 18 und Gasgenerator 16 aneinander zu befestigen, wird der Gasgenerator 16 so in das Halteteil 24 eingesetzt, dass ein einstückig mit dem Gasgenerator 16 ausgebildeter, diesen in Umfangsrichtung umgebender, radial abstehender Befestigungsflansch 32 innerhalb des Außenrands 30 des Halteteils 24 angeordnet ist und auf dem Halteteil 24 aufliegt.

Dann wird der Außenrand 30 mechanisch so umgeformt, dass eine feste Verbindung zum Befestigungsflansch 32 erfolgt. Das Umformen kann beispielsweise durch Krimpen, Prägen oder Umbördeln, aber auch durch eine andere geeignete verrormung erfolgen. Hier wäre es auch möglich, anstelle des Halteteils 24 ganz oder teilweise den Befestigungsflansch 32 zu verformen. Durch diese Maßnahme ist das Generatorlagerteil 18 fest mit dem Gasgenerator 16 verbunden, so dass die Baugruppe 20 als separate Einheit vorgefertigt und gehandhabt werden kann.

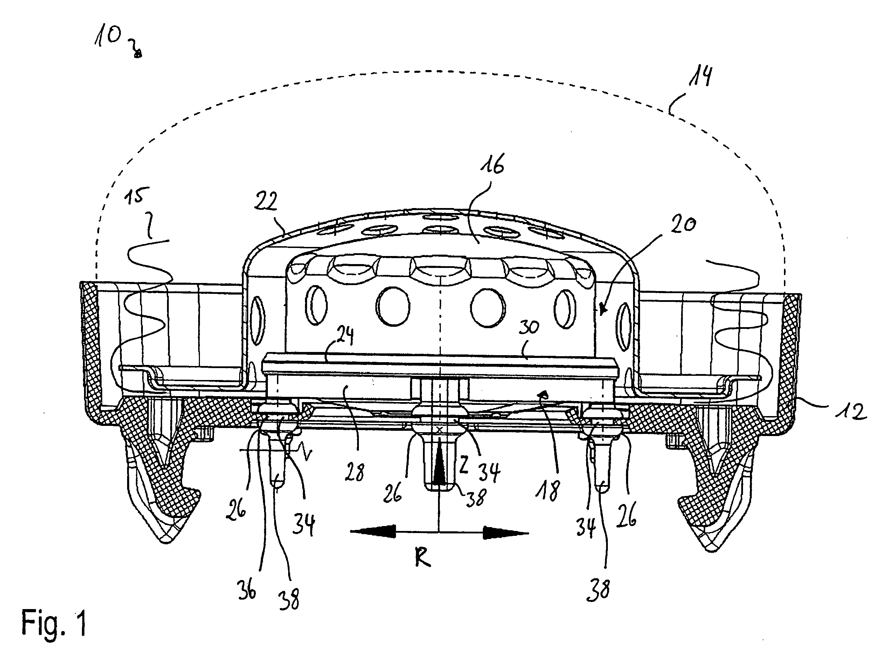

In diesem Beispiel erstrecken sich vier Befestigungsfüße 26 senkrecht zu der durch das Halteteil 24 vorgegebenen Ebene in Axialrichtung, die in Figur 1 als Z-Richtung bezeichnet ist. Jeder der Befestigungsfüße 26 besteht vollständig aus dem elastischen Material und weist eine eingeformte, umlaufende Nut 34 auf. Ein Rand einer Öffnung 36 im Generatorträger 12 greift in diese Nut 34 ein, so dass jeder Befestigungsfuß 26 fest am Generatorträger 12 befestigt ist.

Als Montagehilfe besitzt jeder der Befestigungsfüße 26 eine Montagezunge 38, die zunächst das freie Ende des Befestigungsfußes 26 bildet. Zur Befestigung der Baugruppe 20 am Generatorträger 12 werden die Montagezungen 38 durch die Öffnungen 36 gesteckt und dann durch Zug an den Montagezungen 38 in Axialrichtung Z so weit in Richtung Generatorträger 12 bewegt, bis die Nut 34 jedes der Befestigungsfüße 26 in den jeweiligen Rand der Öffnung 36 einrastet. Jetzt können die Montagezungen 38, falls gewünscht, entfernt werden. Zur weiteren Funktion der Baugruppe tragen sie nichts bei.

Die Anschlaglippe 28 besteht aus mehreren entlang des Umfangs des Halteteils 24 angeordneten Kreissegmenten aus Silikon. An den vier Stellen, an denen am Halteteil 24 die Befestigungsfüße 26 angespritzt sind, ist die Anschlaglippe 28 aus fertigungstechnischen Gründen unterbrochen, so dass kleine Lücken zwischen der Anschlaglippe 28 und den Befestigungsfüßen 26 bestehen. Alternativ könnte die Anschlaglippe 28 auch einstückig in den jeweiligen Befestigungsfuß 26 übergehen und so einstückig umfangsmäßig geschlossen umlaufen.

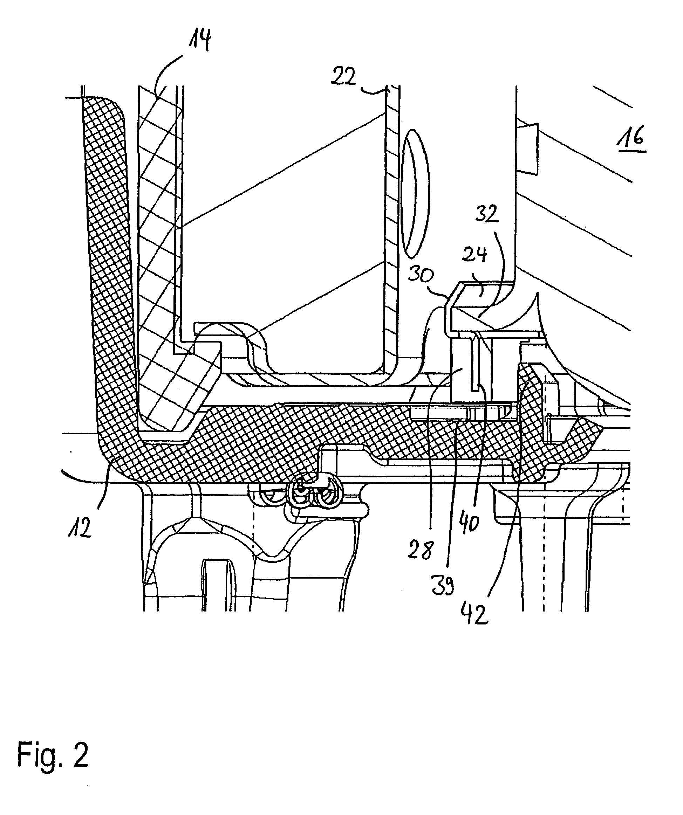

Das Generatorlagerteil 18 ist so gestaltet, dass im Normalzustand, also ohne eine Bewegung des Gasgenerators 16 und vor dessen Aktivierung ein kleiner Abstand in Axialrichtung Z zwischen dem in Axialrichtung unteren Ende der Anschlaglippe 28 und einer Oberfläche des Generatorträgers 12 gebildet ist. Bewegt sich der Gasgenerator 16 in Axialrichtung Z, so kommt bei einer größeren Amplitude die Anschlaglippe 28 in Anlage an den Generatorträger 12, wodurch die Bewegung des Gasgenerators 16 begrenzt wird. Die Oberfläche des Generatorträgers 12 dient dabei als axialer Anschlag 39 (siehe Fig. 2).

Um einen genügenden Widerstand besonders bei heftigen Bewegungen des Gasgenerators 16 zu gewährleisten, sind entlang des Umfangs mehrere axial abstehende Fortsätze 40 des Halteteils 24 in Form von abgewinkelten Zungen in die Anschlaglippe 28 eingebettet. Die Fortsätze 40 enden vor dem freien axialen Ende der Anschlaglippe 28, so dass immer das elastische Material in Kontakt mit dem Generatorträger 12 kommt.

Eine Begrenzung der Bewegung des Gasgenerators 16 in Radialrichtung R wird durch einen am Generatorträger 12 ausgebildeten Anschlag 42 gewährleistet, der radial innerhalb der Anschlaglippe 28 vorgesehen ist. Bei dem Anschlag 42 kann es sich um einen umfangsmäßig umlaufenden Ring handeln oder aber um einzelne, über den Umfang verteilte Vorsprünge am Generatorträger 12.

Der Anschlag 42 erstreckt sich in Axialrichtung Z so weit in Richtung zum Gasgenerator 16, dass es eine Überlappung mit dem Fortsatz 40 gibt. Im Normalzustand ist die Anschlaglippe 28 sowohl vom axialen Anschlag 39 als auch vom radialen Anschlag 42 beabstandet. In diesem Fall ist der Anschlag 42 einstückig mit dem Generatorträger 12 ausgebildet.

Im normalen Fahrbetrieb sorgt das elastische Material der Befestigungsfüße 26 für eine Entkoppelung des Gasgenerators 16 von den Schwingungen des Lenkrads, in das das Gassackmodul 10 eingesetzt ist. Der Gasgenerator 16 kann sich im Rahmen des Spielraums zwischen der Anschlaglippe 28 und den Anschlägen 39 und 40 frei bewegen. Eine größere Bewegung wird durch diese Anschläge 39, 40 verhindert.

Es ist möglich, die Frequenz des Schwingungssystems aus Gasgenerator 16 und Befestigungsfüßen 26 so abzustimmen, dass die hauptsächlich auftretenden Störungsfrequenzen gedämpft oder ganz getilgt werden. Dies ist aber nicht notwendig, es kann auch eine reine Schwingungsentkoppelung vorgesehen sein.

Wird der Gasgenerator 16 aktiviert, so dass Füllgas aus diesem in den Gassack ausströmt, so bewirkt der Druck des ausströmenden Gases sowie der zunehmende Fülldruck im Gassack eine Bewegung des Gasgenerators 16 in Richtung des Generatorträgers 12, wobei die Anschlaglippe 28 in flächigen, umfangsmäßig weitgehend umlaufenden Kontakt mit dem Generatorträger 12 kommt. Auf diese Weise wird eine Abdichtung erzielt, die verhindert, dass Gas aus dem Gassack 15 durch den Generatorträger 12 abströmt. Die hier aus baulichen Gründen vorhandenen Lücken im Umfang der Anschlaglippe 28 haben sich dabei als nicht störend erwiesen.

Es wäre auch denkbar mehrere separate Halteteile vorzusehen, die entlang des Umfangs des Gasgenerators 16 verteilt angeordnet sind und die jeweils einen oder mehrere Befestigungsfüße aufweisen.

Statt Silikon kann auch jedes andere geeignete elastische Material wie etwa Gummi oder ein Elastomer eingesetzt werden.

## Patentansprüche

1. Baugruppe, insbesondere für ein Fahrzeuginsassen-Rückhaltesystem, aus einem Gasgenerator (16) mit einem Befestigungsflansch (32) und einem Generatorlagerteil (18) zur elastischen Lagerung des Gasgenerators (16), wobei das Generatorlagerteil (18) ein Halteteil (24) aus einem Metallblech und wenigstens einen am Halteteil (24) angebrachten Befestigungsfuss (26) aus einem elastischen Material zur Verbindung mit einem Generatorträger (12) aufweist, **dadurch gekennzeichnet, dass** das Halteteil (24) und der Befestigungsflansch (32) durch plastisches Umformen wenigstens eines der beiden Teile aneinander befestigt sind, und dass das Generatorlagerteil (18) wenigstens eine Anschlaglippe (28) aus dem elastischen Material aufweist, die sich im Wesentlichen in einer Axialrichtung (z) der Baugruppe (20) erstreckt.

2. Baugruppe nach Anspruch 1 , **dadurch gekennzeichnet, dass** das Halteteil (24) ringförmig ist.

3. Baugruppe nach einem der vorhergehenden Ansprüche, **dadurch gekennzeichnet, dass** das Halteteil (24) durch Krimpen, Prägen oder Umbördeln am Befestigungsflansch (32) arretiert ist.

4. Baugruppe nach Anspruch 3, dadurch gekennzeichet, dass das Halteteil (24) umlaufend am Gasgenerator (16) befestigt ist.

5. Baugruppe nach einem der vorhergehenden Ansprüche, **dadurch gekennzeichnet, dass** wenigstens ein in Axialrichtung (Z) abstehender Fortsatz (40) des Halteteils (24) im Bereich der Anschlaglippe (28) vorgesehen ist.

6. Baugruppe nach Anspruch 5, **dadurch gekennzeichnet, dass** der Fortsatz (40) in die Anschlaglippe (28) eingebettet ist.

7. Baugruppe nach einen der Ansprüche 5 und 6, **dadurch gekennzeichnet, dass** der Fortsatz (40) durch wenigstens eine vom Halteteil (24) abstehende Zunge gebildet ist.

8. Baugruppe nach einem der Ansprüche 5 bis 7, **dadurch gekennzeichnet, dass** die Anschlaglippe (28) zumindest weitgehend umfangsmässig geschlossen umlaufend ausgebildet ist.

9. Baugruppe nach einem der vorhergehenden Ansprüche, **dadurch gekennzeichnet, dass** das elastische Material Silikon ist und der Befestigungsfuss (26) vorzugsweise an das Halteteil (24) angespritzt ist.

10. Gassackmodul mit einer Baugruppe nach einem der vorhergehenden Ansprüche und einem Generatorträger (12), **dadurch gekennzeichnet, dass** mehrere Befestigungsfüsse (26) vorgesehen sind und die Befestigungsfüsse (26) den Gasgenerator (16) am Generatorträgcr (12) befestigen.

11. Gassackmodul nach Anspruch 10, **dadurch gekennzeichnet, dass** die Befestigungsfüssc (26) vor der Montage am Generatorträger (12) jeweils eine Montagezunge (38) aufweisen, die das freie Ende des zugeordneten Befestigungsfusses (26) bildet.

12. Gassackmodul nach einem der Ansprüche 10 und 11, **dadurch gekennzeichnet, dass** jeder Befestigungsfuss (26) eine umlaufende Nut (34) aufweist, in die ein Rand einer Öffnung (36) im Generatorträger (12) eingreift.

13. Gassackmodul nach einem der Ansprüche 10 bis 12, **dadurch gekennzeichnet, dass** die Anschlaglippe (28) einem axialen und/oder einem radialen Anschlag (42) am Generatorträger (12) gegenüberliegt, der eine Bewegung des Gasgenerators (16) in Axialrichtung (Z) und/oder Radialrichtung (R) begrenzt.

14. Gassackmodul nach einem der Ansprüche 10 bis 13, **dadurch gekennzeichnet, dass** die Anschlaglippe (28) bei einer Aktivierung des Gasgenerators (16) in Anlage an den Generatorträger (12) kommt und eine Abdichtung zwischen Gasgenerator (16) und Generatorträgers (12) bewirkt.

## Claims

1. Assembly, especially for a vehicle occupant restraint system, comprising an inflator (16) having a mounting flange (32) and an inflator supporting member (18) for resilient support of the inflator (16), wherein the inflator supporting member (18) includes a holding member (24) of metal sheet and at least one mounting foot (26) made of elastic material and arranged at the holding member (24) for connection to an inflator base (12) **characterized in that** the holding member (24) and the mounting flange (32) are fixed to each other by plastic shaping of at least one of the two parts, and **in that** the inflator supporting member (18) has at least one stop lip (28) made of the elastic material and extending substantially in an axial direction (Z) of the assembly (20).

2. The assembly according to claim 1, **characterized in that** the holding member (24) has an annular shape.

3. The assembly according to any one of the preceding claims, **characterized in that** the holding member (24) is locked at the mounting flange (32) by crimping, stamping or bordering.

4. The assembly according to claim 3, **characterized in that** the holding member (24) is circumferentially mounted on the inflator (16).

5. The assembly according to any one of the preceding claims, **characterized in that** at least one extension (40) of the holding member (24) projecting in the axial direction (Z) is provided in the area of the stop lip (28).

6. The assembly according to claim 5, **characterized in that** the extension (40) is embedded in the stop lip (28).

7. The assembly according to any one of the claims 5 and 6, **characterized in that** the extension (40) is formed by at least one latch projecting from the holding member (24).

8. The assembly according to any one of the claims 5 to 7, **characterized in that** the stop lip (28) is continuously formed to be at least largely circumferentially closed.

9. The assembly according to any one of the preceding claims, **characterized in that** the elastic material is silicone and the mounting foot (26) is preferably extrusion-molded to the holding member (24).

10. An airbag module comprising an assembly according to any one of the preceding claims and an inflator base (12), **characterized in that** plural mounting feet (26) are provided and the mounting feet (26) mount the inflator (16) on the inflator base (12).

11. The airbag module according to claim 10, **characterized in that** prior to mounting on the inflator base (12) each of the mounting feet (26) has a mounting latch (38) which forms the free end of the associated mounting foot (26).

12. The airbag module according to any one of the claims 10 and 11, **characterized in that** each mounting foot (26) includes a circumferential groove (34) in which an edge of an opening (36) in the inflator base (12) engages.

13. The airbag module according to any one of the claims 10 to 12, **characterized in that** the stop lip (28) is opposed to an axial and/or a radial stop (42) provided at the inflator base (12) for limiting a movement of the inflator (16) in the axial direction (Z) and /or the radial direction (R).

14. The airbag module according to any one of the claims 10 to 13, **characterized in that** upon activation of the inflator (16) the stop lip (28) contacts the inflator base (12) and effectuates a sealing between the inflator (16) and the inflator base (12).

## Revendications

1. Ensemble, en particulier pour un système de retenue de véhicule, constitué d'un générateur de gaz (16) avec un flasque de fixation (32) et une partie recevant le générateur (18) pour un support élastique du générateur de gaz (16), ou la partie recevant le générateur (18) possède une pièce de fixation (24) en tôle métallique et au moins, attaché a une pièce de fixation (24),un pied de fixation (26) en matériau élastique pour liaison avec un support de générateur (12), **caractérisé en ce que**, la pièce de fixation (24) et le flasque de fixation (32) sont fixées l'une a l'autre par déformation plastique d'au moins l'une des deux pièces, et que la partie portant le générateur (18) possède au moins une lèvre de blocage (28) en matériau élastique, qui s'étend en particulier dans la direction axiale du module.

2. Ensemble selon la revendication 1, **caractérisé en ce que** la pièce de fixation (24) est de forme annulaire.

3. Ensemble selon l'une des revendications précédentes, **caractérisé en ce que**, la pièce de fixation (24) est reliée au flasque de fixation (32) par sertissage, gaufrage, emboutissage.

4. Ensemble selon la revendication 3, **caractérisé en ce que**, la pièce de fixation (24) est fixée a la périphérie du générateur de gaz (16).

5. Ensemble selon l'une des revendications précédentes, **caractérisé en ce que**, il est prévu au moins dans une direction axiale (Z) une extension saillante (40) de la pièce de fixation (24) dans la zone de la lèvre de blocage.

6. Ensemble selon la revendication 5, **caractérisé en ce que**, l'extension (40) est intégré dans la lèvre de blocage.

7. Ensemble selon l'une des revendications 5 et 6, **caractérisé en ce que**, l'extension se présente sous la forme d'au moins une languette en saillie de la pièce de fixation (24).

8. Ensemble selon l'une des revendications 5 jusqu'à 7, **caractérisé en ce que**, la lèvre de blocage (28) est au moins en grande partie fermée sur sa circonférence en périphérie.

9. Ensemble selon l'une des revendications précédentes, **caractérisé en ce que**, le matériau élastique est du silicone et que le pied de fixation (26) est surmoulé sur la pièce de fixation (24).

10. Module airbag avec un ensemble selon l'une des revendications précédentes et un support de générateur (12), **caractérisé en ce que**, plusieurs pieds de fixation (26) maintiennent le générateur de gaz (16) au support de générateur (12).

11. Module airbag selon la revendication (10), **caractérisé en ce que**, les pieds de fixation (26) ont, avant le montage sur le support de générateur (12), chacun une languette de fixation (38), qui se trouvent a l'extrémité libre des dits pieds de fixation (26).

12. Module airbag selon l'une des revendications 10 et 11, **caractérisé en ce que**, chaque pied de fixation (26) possède une rainure circonférentielle (34) dans laquelle s'accroche un bord d'une ouverture (36) se trouvant dans le support de générateur (12).

13. Module airbag selon l'une des revendications 10 jusqu'a 12, **caractérisé en ce que**, la lèvre de blocage (28) se trouve en face d'une butée axiale et ou radiale (42) sur le support de générateur (12), ce qui limite le mouvement du générateur de gaz (16) en direction axiale (Z) et ou en direction radiale (R).

14. Module airbag selon l'une des revendications 10 jusqu'à 13, **caractérisé en ce que**, la lèvre de blocage (28) vient par l'activation du générateur de gaz (16) au contact du support de générateur (12) et réalise une étanchéité entre le générateur de gaz (16) et le support de générateur (12).
